Europäisches Patentamt

(19) **European Patent Office**

**Office européen des brevets**

(11) Veröffentlichungsnummer: **0 032 963**

**A1**

(12) # EUROPÄISCHE PATENTANMELDUNG

(21) Anmeldenummer: **80100406.0**

(22) Anmeldetag: **26.01.80**

(51) Int. Cl.³: **F 03 G 7/10**

(43) Veröffentlichungstag der Anmeldung:
**05.08.81 Patentblatt 81/31**

(84) Benannte Vertragsstaaten:
**AT BE CH DE FR GB IT LU NL SE**

(71) Anmelder: **Spitzer Maschinenbau GmbH
Allersberger Strasse 1
D-8501 Pyrbaum(DE)**

(72) Erfinder: **Spitzer, Bernhard Michael
Allersberger Strasse 1
D-8501 Pyrbaum(DE)**

(74) Vertreter: **Göbel, Matthias
Pruppacher Hauptstrasse 5-7
D-8501 Pyrbaum-Pruppach(DE)**

(54) **Vorrichtung zum Antreiben einer Welle.**

(57) Bei der zum Antreiben einer Welle (4) dienenden Vorrichtung ist um einen mit der Welle (4) verbundenen Rollenkörper (2) und einen im Abstand unterhalb diesem angeordneten Rollenkörper (3) ein endloser Bandzug (5, 5') geführt. Der Bandzug trägt angelenkte Hebel (7) und Stützhebel (8). Im Aufwärtstrum des Bandzugs hängen Hebel (7) und Stützhebel (8) frei abwärts und im Abwärtstrum sind die Hebel (7) nach außen abgeklappt durch die Stützhebel (8) gehalten. Das Abwärtstrum ist außerdem über einen ersten Abschnitt schräg nach außen und einem anschließenden zweiten Abschnitt schräg nach innen auf den unteren Rollenkörper (3) auflaufend geführt.

Fig.1

EP 0 032 963 A1

# M. GÖBEL
### PATENT- U. ZIV.-INGENIEUR

**0032963**

**8501 PYRBAUM-PRUPPACH**
PRUPPACHER HAUPTSTRASSE 5-7
TELEFON 09180 2 / 675

BANKKONTEN:
VOLKSBANK NÜRNBERG 45233 BLZ 760 900 00
COMMERZBANK NÜRNBERG 8 300 907 BLZ 760 400 61

- 1 -

Spitzer Maschinenbau GmbH, 8501 Pyrbaum

Vorrichtung zum Antreiben einer Welle.

Die Erfindung betrifft eine Vorrichtung zum Antreiben einer Welle mittels eines an wellenfesten Rollenkörpern angreifenden Bandzugs od.dgl.

Es ist bekannt, den Bandzug zum Drehen von Wellen durch einen mit elektrischer Energie bzw. fossilen Energieträgern betreibbaren Motor zu bewegen.

Aufgabe der Erfindung ist es Maßnahmen zu schaffen, die den Bandzug zum Antreiben einer Welle auf mechanischem Wege in Bewegung setzen und in Bewegung halten.

Erfindungsgemäß ist diese Aufgabe dadurch gelöst, daß an einem um zwei im Abstand in einem Gestell übereinander angeordnete Rollenkörper endlos geführten Bandzug in gleichen Abständen eine Anzahl Gewichte tragende Hebel und achsgleich unabhängig Stützhebel mittels Gelenken angeordnet sind, daß

-/5

- 2 -

im Aufwärtstrum des Bandzugs die Hebel und die Stützhebel an den Gelenken frei abwärts hängen, während im Abwärtstrum die Hebel quer nach außen abgeklappt und mittels der Stützhebel gehalten sind und daß das Abwärtstrum mit einem vom oberen Rollenkörper ablaufenden ersten Abschnitt schräg nach außen und einem an diesem anschließenden zweiten Abschnitt schräg nach innen auf den unteren Rollenkörper auflaufend geführt ist. Nach bevorzugter Ausbildung der Vorrichtung sind zur Beibehaltung kontinuierlicher Bewegungen im Bandzug mindestens achtzehn mit Hebel und Stützhebel ausgerüstete Gelenke vorgesehen. Die so gebildete Vorrichtung ermöglicht, einmal in Bewegung gesetzt, vermittels der sich selbsttätig einstellenden verschieden grossen Abständen der Hebel bzw. Gewichte beidseitig der gemeinsamen Mittellängsebene der Rollenkörper eine stetige Bewegung des Bandzugs, die form- und/oder kraftschlüssige Mitnahme der Rollenkörper und dadurch Drehungen der insbesondere mit dem oberen Rollenkörper drehfest verbundenen Welle.

Zur Erreichung und sicheren Beibehaltung verschieden großer Abstände der Hebel und Stützhebel zur Längsmittelebene ist in weiterer Ausgestaltung vorgesehen, daß das Abwärtstrum des Bandzugs über einen im Abstand vor der Fallinie der Umfangsfläche des oberen Rollenkörpers angeordneten gestellfesten Führungsstift gleitet. Die so im Abwärtstrum gebildeten ersten und zweiten Abschnitte können dabei gradlinig, z.B. über ebene Führungsbahnen oder über nach außen bogenförmig ausgebildete Führungsbahnen gleiten, wobei bogenförmige Führungsbahnen zu Drehmomenterhöhungen am oberen Rollenkörper führen.

Es entspricht dem Wesen der Erfindung, daß der Bandzug beliebig durch Ketten, Seile, Riemen oder anderweitig geeignete Mittel gebildet sein kann. Eine besonders vorteilhafte Ausgestaltung der Vorrichtung ist dann erzielbar, wenn die oberen und unteren Rollenkörper durch, z.B. zwei im Abstand nebeneinander ausgebildete Ketten- oder Schnurräder bzw. Walzen gebildet sind, über die als Bandzug durch Stege verbundene Ketten, Seile oder Riemen geführt sind. Es versteht sich, daß auch mehr als zwei Ketten- oder Schnurräder bzw. Walzen nebeneinander als oberer und unterer Rollenkörper auf gemeinsamen Wellen in Verbindung mit einem entsprechend ausgebildeten Bandzug in Anwendung bringbar sind.

Die Stege des Bandzugs sind als Träger der Hebel und Stützhebel zu nutzen. Diese sind hierzu vorzugsweise an an den Stegen angreifenden Gelenken festgelegt, die sich zwischen zwei Endstellungen, z.B. einem Drehwinkel von im wesentlichen 90° gegeneinander verschwenken lassen und sich in den Endstellungen aneinander abstützen. Dies gewährleistet, daß im

- 4 -

Aufwärtstrum des Bandzugs beide Hebelgruppen weitgehend in eine zur Längsmittelebene der Rollenkörper angenäherte Stellung abwärts abgeklappt sind, während im Abwärtstrum die ausgeklappten und gegebenenfalls mit Gewichten beschwerten Hebel nach außen geklappt durch den jeweils zugeordneten Stützhebel, der sich an das in Bewegungsrichtung folgende Gelenk anlegt, gehalten sind. Die Abstützung der ausgeklappten Hebel im Abwärtstrum kann auch in beliebig anderer Weise, z.B. durch Anlage von an den Hebeln angeordneten Verbreiterungen am Bandzug erreicht sein.

Schließlich sind noch Maßnahmen zur vorbestimmten Stillsetzung der Vorrichtung vorgesehen. Dies ist einfach durch Verkleinerung des lichten Abstands des unteren Rollenkörpers zum oberen Rollenkörper erzielbar. Zweckmäßig ist hierzu der untere Rollenkörper in Richtung des oberen Rollenkörpers verschieblich im Gestell der Vorrichtung gehalten. Zur gesicherten Funktion der Vorrichtung ist außerdem noch vorgesehen, daß der Durchmesser des oberen Rollenkörpers zu der Länge des die Gewichte tragenden Hebels etwa im Verhältnis 1:1 ausgeführt ist, während die Länge des Abwärtstrums mindestens dem Umfang des oberen Rollenkörpers entspricht.

Die Erfindung ist anhand eines Ausführungsbeispiels in der Zeichnung verdeutlicht. Es zeigen:

-/8

Fig. 1    eine Vorrichtung in Seitenansicht, schematisch,

Fig. 2    ein Teilstück einer Vorrichtung in Rückansicht,
          schematisch und

Fig. 3    ein Teilstück eines Bandzugs perspektivisch.

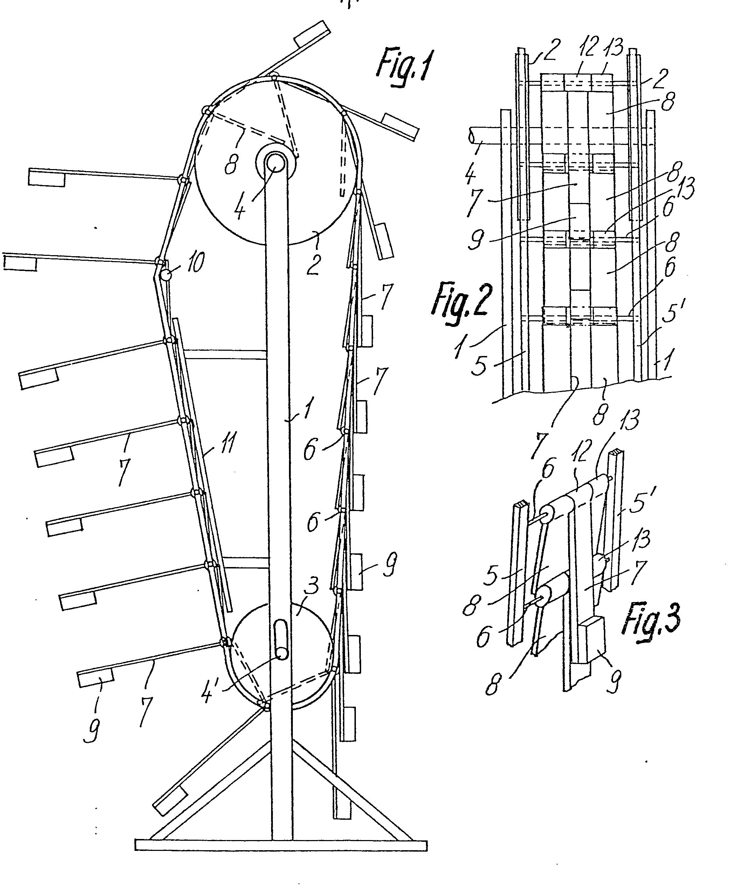

In den Fig. 1 und 2 ist mit 1 ein Gestell bezeichnet, das gegebenenfalls durch die Wände eines die Vorrichtung aufnehmenden Schachtes ersetzt sein kann. Das Gestell 1 nimmt paarweise einen oberen Rollenkörper 2 und einen unteren Rollenkörper 3 auf. Der obere Rollenkörper 2 ist mit einer Welle 4 fest verbunden, während der Rollenkörper 3 auf einer Achse 4' dreht. Die Rollenkörper 2 und 3 führen Ketten 5, 5' (Fig. 2, 3) die durch Stege 6 miteinander verbunden sind. Beim Ausführungsbeispiel finden insgesamt achtzehn Stege 6 Verwendung. An den Stegen 6 sind mittels Gelenken 12 Hebel 7 und/durch Gelenke 13 Stütz-hebel 8 gehalten. Die Gelenke 12, 13 sind um etwa 90$^0$ zueinan-der verschwenkbar aneinander abstützbar ausgebildet. Die Hebel 7 tragen an den freien Enden zusätzliche Gewichte 9, wobei die Schwere der Gewichte primär für die Leistung der Vorrichtung von Bedeutung ist. Der untere Rollenkörper 3 ist im Gestell 1 verschieblich gehalten. Das Gestell 1 hält weiter einen gestellfesten Führungsstift 10, über den das Abwärtstrum der Ketten 5, 5' zum Zwecke der Schaffung eines für dieses größeren Abstands zur Längsmittelebene gleitet. Mittels des Führungsstiftes 10 ist das Abwärtstrum in einen ersten und einen zweiten Abschnitt unterteilt. Der zweite Abschnitt des Abwärtstrum stützt sich zusätzlich auf eine ebene Führungsbahn 11 ab. Es ist gefunden worden, daß eine nach außen bogenförmig gekrümmte Führungsbahn, die Leistung der Vorrichtung verbessern hilft.

Es sei angenommen, daß die Vorrichtung zunächst die Stellung der Fig. 1 einnimmt. Hierbei sind die Hebel 7 und die Stützhebel 8 im Bereich des Aufwärtstrums mittels der Gelenke 12, 13 an den Stegen hängend gehalten. Nach Anwurf der Vorrichtung werden die Ketten 5, 5' über den oberen Rollenkörper 2 bewegt und die Hebel 7 klappen im Bereich des Abwärtstrums (Fig. 1) nach außen ab und sind mittels der Stützhebel 8 annähernd quer abstehend gehalten. Das Abwärtstrum gleitet über den Führungsstift 10 und auf der Führungsbahn 11 mit größerem Abstand zur Längsmittelebene im Vergleich zum Aufwärtstrum. Bedingt durch die so erzielten unterschiedlich großen Abstände im Aufwärts- und Abwärtstrum des Bandzugs unterstützt durch das Abklappen der Hebel 7 im Abwärtstrum erfolgt ein kontinuierlicher Umlauf der Ketten 5, 5' und damit der Rollenkörper 2, 3 ein - schließlich der Welle 4.

Durch Aufwärtsschieben des unteren Rollenkörpers 3 ist die Stillsetzung der Vorrichtung zu erreichen. Eine Stillsetzung tritt aber durch entsprechendes Abbremsen der Welle 4 ein. Es hat sich gezeigt, daß mit größeren Gewichten und größeren Abständen des Abwärtstrums zur Längsmittelebene die Leistung der Vorrichtung zunimmt.

**M. GÖBEL**

PATENT- U. ZIV.-INGENIEUR

8501 PYRBAUM-PRUPPACH
PRUPPACHER HAUPTSTRASSE 5-7
TELEFON 09I802 / 675

BANKKONTEN:
VOLKSBANK NÜRNBERG 45233 BLZ 760 900 00
COMMERZBANK NÜRNBERG 8 300 907 BLZ 760 400 61

0032963

- 7 -

Spitzer Maschinenbau GmbH, D 8501 Pyrbaum

Patentansprüche

1. Vorrichtung zum Antreiben einer Welle mittels eines an wellenfesten Rollenkörpern angreifenden Bandzugs od.dgl., dadurch gekennzeichnet, daß an einem um zwei im Abstand in einem Gestell (1) übereinander angeordnete Rollenkörper (2, 3) endlos geführten Bandzug (5, 5') in gleichen Abständen eine Anzahl Gewichte (9) tragende Hebel (7) und achsgleich unabhängig Stützhebel (8) mittels Gelenken (12, 13) angeordnet sind, daß im Aufwärtstrum des Bandzugs (5, 5') die Hebel (7) und die Stützhebel (8) an den Gelenken (12, 13) frei abwärts hängen, während im Abwärtstrum die Hebel (7) quer nach außen abgeklappt und mittels der Stützhebel (8) gehalten sind und daß das Abwärtstrum mit einem vom oberen Rollenkörper (2) ablaufenden ersten Abschnitt schräg nach außen und einem an diesem anschließenden zweiten Abschnitt schräg nach innen auf den unteren Rollenkörper (3) auflaufend geführt ist.

2. Vorrichtung nach Anspruch 1, gekennzeichnet durch die Anordnung von mindestens achtzehn im Bandzug (5, 5') angeordneten Gelenken (12, 13) mit Hebeln (7) und Stützhebeln (8).

-/2

3. Vorrichtung nach Anspruch 1, dadurch gekennzeichnet, daß das Abwärtstrum des Bandzugs (5, 5') über einen im Abstand vor der Fallinie der Umfangsfläche des oberen Rollenkörpers (2) angeordneten Führungsstift (10) gleitet.

4. Vorrichtung nach Anspruch 1 und 3, dadurch gekennzeichnet, daß das Abwärtstrum des Bandzugs (5, 5') auf einer sich am Führungsstift (10) in Laufrichtung des Bandzugs anschließenden ebenen Führungsbahn (11) gleitet.

5. Vorrichtung nach Anspruch 1 und 3, dadurch gekennzeichnet, daß das Abwärtstrum des Bandzugs (5, 5') auf einer sich am Führungsstift (10) in Laufrichtung des Bandzugs anschließenden bogenförmigen Führungsbahn (11) gleitet.

6. Vorrichtung nach Anspruch 1, dadurch gekennzeichnet, daß als oberer und unterer Rollenkörper (2, 3) im Abstand nebeneinander ausgebildete Kettenräder-oder Schnurräder-bzw. Walzenpaare dienen.

7. Vorrichtung nach Anspruch 1, dadurch gekennzeichnet, daß der Bandzug (5, 5') durch Ketten- Seil- oder Riemenpaare gebildet ist, die durch Stege (6) miteinander verbunden sind.

8. Vorrichtung nach Anspruch 7, dadurch gekennzeichnet, daß die Stege (6) Gelenke (12, 13) für die Hebel (7) und Stützhebel (8) aufnehmen.

9. Vorrichtung nach Anspruch 7, dadurch gekennzeichnet, daß die Hebel (7) und Stützhebel (8) zwischen zwei Endstellungen gegeneinander verschwenkbar und aneinander abstützbar sind.

10. Vorrichtung nach Anspruch 1, dadurch gekennzeichnet, daß die untere Umlenkrolle(3)in Richtung der oberen Umlenkrolle(2) verschieblich im Gestell (1) ausgebildet ist.

11. Vorrichtung nach Anspruch 1, dadurch gekennzeichnet, daß der Durchmesser des Rollenkörpers (2) und die Länge der Hebel (7) im Verhältnis 1:1 und die Länge des Abwärtstrums des Bandzugs mindestens mit dem Umfang des Rollenkörpers (2) ausgeführt ist.

Fig.1

Fig.2

Fig.3

# EUROPÄISCHER RECHERCHENBERICHT

**Europäisches Patentamt**

Nummer der Anmeldung

EP 80 10 0406

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - A - 394 153 (J. OLIVIER) <br> * Seiten 1,2; Figuren * | 1,2 |
| | GB - A - 118 265 (KOSTEFSKI) <br> * Seiten 1,2; Figuren * | 1 |
| A | US - A - 3 945 755 (GENTILE) <br> * Seite 1; Zusammenfassung; Figur 4 * | 1 |
| A | FR - A - 2 102 882 (LELANDAIS) <br> * Seiten 1,2; Figuren * | |
| A | BE - A - 366 683 (WERMAN) <br> * Seite 5; Anspruch 1; Seite 6; Ansprüche 2-4; Figuren * | |
| A | GB - A - 127 466 (C.S. McINTIRE) <br> * Seite 2, Zeile 39 bis Seite 4, Zeile 20; Figur 1 * | |
| A | GB - A - 141 618 (W. YOUNGER) <br> * Seite 4; Ansprüche 1,2; Figur 1 * | |

**KLASSIFIKATION DER ANMELDUNG (Int Cl. ¹)**

F 03 G 7/10

**RECHERCHIERTE SACHGEBIETE (Int. Cl. ³)**

F 03 G

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenor. | Abschlußdatum der Recherche | Prüfer |
|---|---|---|
| Den Haag | 04-08-1980 | TATUS |

EPA form 1503.1 06.78